# EUROPEAN PATENT SPECIFICATION

(11) **EP 0 434 791 B1**
(45) Date of publication and mention of the grant of the patent: **16.02.1994**
(21) Application number: 90909112.6
(22) Date of filing: 29.06.1990
(51) Int. Cl.: F16L 9/133, B29C 67/14

(54) **COMPOSITE PLASTIC PIPE**
MEHRSCHICHTIGES KUNSTSTOFFROHR
TUYAU EN PLASTIQUE COMPOSITE

(30) Priority: 29.06.1989 BE 8900714
(43) Date of publication of application: 03.07.1991
(73) Proprietor: JONACO GMBH, CH-6300 ZUG (CH)
(72) Inventor: DIERICKX, Patrieck, B-8658 Dadizele (BE)
(74) Representative: Donné, Eddy
(86) International application number: BE9000037
(87) International publication number: WO9100466

(56) References cited:
- DE-U- 1 796 920
- FR-A- 1 305 213
- FR-A- 2 339 120
- FR-A- 2 342 837

## Description

The invention relates to a method for manufacturing a composite plastic pipe, according to which at least two pipes of synthetic material are installed close-fitting around each other, one of said pipes being made in thermoplastic material and extruded.

A method of this kind is disclosed in FR-A-2 342 837. According to this known method, a pipe which may be of thermoplastic material and is provided with grooves in its lengthwise direction is covered on the outside with a layer of thermohardening plastic material. This layer fills the grooves and is hardened by heating.

The inner pipe asures the waterthightness, while the outer pipe provides rigidity in the longitudinal direction. The disadvantage of this known pipe is however that it cannot offer sufficient resistance to very high pressure loads so that the transport of liquids under very high pressure is excluded.

FR-A-1 305 213 discloses a method for manufacturing a reinforced plastic pipe. According to this method a flattened hose of thermoplastic material is covered on both sides with a single layer of reinforcement material such as a fabric of glass fibres, impregnated by a synthetic resin and with an insulating thermoplastic layer, after which the hose is inflated inside a mould and the resin is solidified. An already solidified end of the inflated covered hose leaves the mould and is further extruded.

The thus obtained pipe may offer a good resistance to high pressure loads but the method which is rather complicated, does not guarantee the water tightness of the pipe.

The object of the present invention, is a method for manufacturing a composite plastic pipe which permits to exclude the aforementioned disadvantages and which consequently permits to obtain a composite plastic pipe which is not only watertight and suitable for transporting chemically corrosive products, but which is at the same time capable of transporting such liquids under high pressure.

Yet an additional advantage is that in this manner a plastic pipe is obtained which shows a very great impact resistance.

This object and these advantages are obtained by the fact that the other pipe, this is the pipe installed around or inside the extruded thermoplastic pipe, is pultruded or pull-wound, in thermoplastic or preferably thermo-hordening material.

Pipes made by pultrusion or by pull-winding are known as such. In both cases a reinforcement material is impregnated by resin, shaped by means of a die or a mould in one or more steps and hardened, usually in a mould. A pull mechanism, comprising for instance two reciprocating clamp units, pulls the obtained pipe forward. The reinforcement material may be fibres, rovings, or fabrics and unidirectional in the pultrusion method. The pull-winding method is similar bur additionaly hoop or angled fibres are wrapped between layers of unidirectional fibres.

It is known that such pultruded or pull-wound pipe has a very great strength and can resist very high pressures.

However, due to the presence of fibres, rovings or fabric in the plastic, the watertightness thereof cannot be guaranteed, among others because liquids which could be transported through such pultruded and/or pull-wound plastic pipes leak away along fibres which in one way or another offer a passage from one side of the plastic pipe to the other side of it.

In a particular embodiment of the invention, the pultruded or pull-wound pipe is installed around the other pipe .

In another particular embodiment of the invention, the surface of the inner pipe is roughened before interconnecting the outer pipe with the roughened surface.

In this way the pipes excert an anti-rotating effect in relation to each other so that the composite pipe presents also a great resistance against torsion.

The aforementioned external surface of the inner pipe, respectively the internal surface of the outer pipe, can for this purpose be produced corrugated or similar whereby the corrugations, notches or similar of the aforementioned surfaces interconnect.

Although such working together of the surfaces of inner pipe and outer pipe is preferable, this is not restrictive. Yet a very good result can also be obtained with pipes of which the cooperating surfaces are produced smooth.

A composite pipe according to the present invention will preferably be obtained by an inner pipe in a thermoplastic, for example polypropylene, polyvinyl chloride, high-density polyethylene, polyamide or similar, by effecting extusion, after which an outer pipe is formed around the thus formed inner pipe by pulling fibres or fabrics soaked in a thermoplastic or thermo-hardening synthetic material, for example in polyester, vinyl ester, epoxy or similar, through a heated die, in other words by pultruding around the thus formed inner pipe.

Obviously the composite pipe according to the invention can also be produced by a pultruded inner pipe with an extruded outer pipe around it.

In order to show better the characteristics according to the present invention, a preferred embodiment is described hereafter, as example without any restrictive character, with reference to the enclosed drawings, in which:
figure 1 shows a radial section through a composite plastic pipe manufactured according to the invention;
figure shows on larger scale and for an embodiment variant the part that is indicated by F2 in figure 1;
figure 3 shows a variant of figure 2.

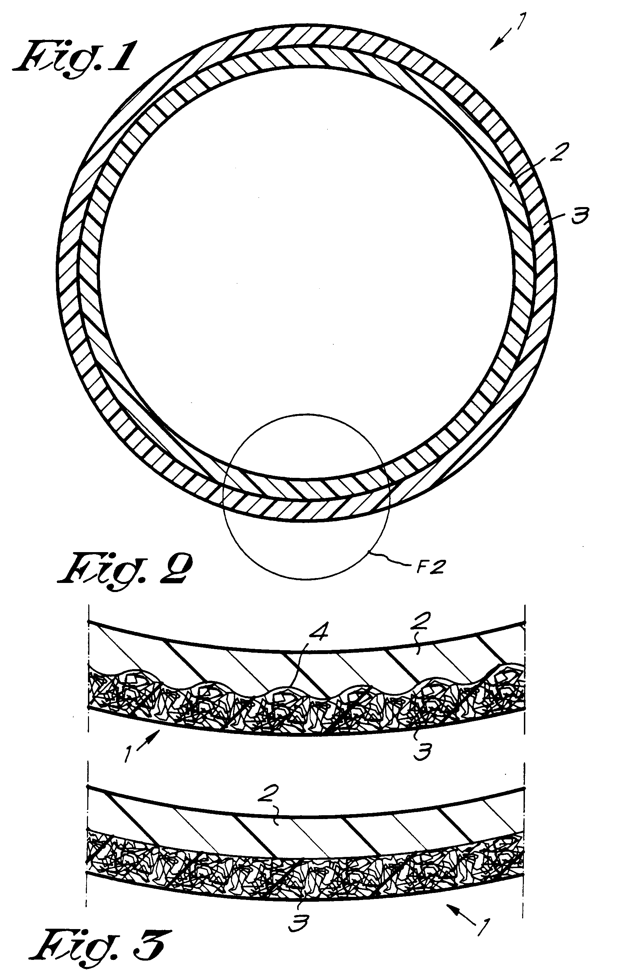

In figure 1 a composite plastic pipe 1 according to the invention is shown which is principally formed by an inner pipe 2 in a thermoplastic material, for example polypropylene, polyvinyl chloride, high-density polyethylene or similar which is obtained by extrusion and an outer pipe 3 in a thermoplastic or thermo-hardening material, for example polyester, vinyl ester, epoxy or similar which is obtained by pultrusion and/or pull winding and which is installed close-fitting around the inner pipe 2.

An inner pipe is thus obtained which is tight and through which chemically corrosive products can be transported with an outer pipe around it which is very impact resistant and which can resist high pressures.

In figure 2 it is indicated that the inner surface of the outer pipe, on the one side, and the outer surface of the inner pipe, on the other side can be produced smooth or rough in order to provide such a pipe with a very effective resistance against torsion.

Such rough surfaces can for example be obtained by extruding the inner pipe 2 with corrugations 4 extending according to the longitudinal direction of the pipe around which the outer pipe 3 is pultruded, all of which such that the internal surface of the 3 automatically takes on the form of the outer surface of the pipe 2.

Other shapes for obtaining an interconnection between the pipes 2 and 3 are obviously also possible, such as transverse notches for example, which ensure the connection in the longitudinal direction and similar.

In figure 3 it is finally still shown that it is also possible to combine an externally smooth inner pipe with an internally smooth outer pipe.

A thus obtained composite plastic pipe can be implemented in different kinds of forms and dimensions, such as a composite with plastic/metal, ferrous and nonferrous, and interchangeable.

## Claims

1. Method for manufacturing a composite plastic pipe, according to which at least two pipes (2,3) of synthetic material are installed close-fitting around each other, one of said pipes (2,3) being made in thermoplastic material and extruded, characterized in that the other pipe is pultruded or pull-wound in thermoplastic or preferably thermo-hordening material.

2. Method according to claim 1, characterized in that the pultruded or pull-wound pipe (3) is installed around the other pipe (2).

3. Method according to claim 1, characterized in that the pultruded or pull-wound pipe (3) is installed inside the other pipe (2).

4. Method according to either one of the preceding claims, characterized in that the surface of the inner pipe (2) is roughened before interconnecting the outer pipe (3) with the roughened surface.

5. Method according to claim 4, characterized in that the inner pipe (2) is provided on its surface with protruding corrugations (4) extending according to the longitudinal direction thereof before interconnecting the outer pipe (3) with the corrugated surface.

6. Method according to claim 4, characterized in that the inner pipe (2) is provided with notches before interconnecting the outer pipe (3) with these notches.

7. Method according to either one of the preceding claims, characterized in that the pultruded or pull-wound pipe (3) is made from thermo-hardening material.

8. Method according to claim 7, characterized in that the pultruded or pull-wound pipe (3) is made from at least one thermo-hardening material from the group consisting of: polyester, epoxy and vinyl ester.

9. Method according to either one of the preceding claims, characterized in that the extruded pipe (2) is made from at least one thermoplastic material from the group consisting of: polypropylene, polyvinyl-chloride, high-density polyethylene, polyamide , LLD and PE.

## Patentansprüche

1. Verfahren für die Herstellung eines mehrschichtigen Kunststoffrohrs, gemäß dessen zumindest zwei Rohre (2, 3) aus synthetischem Material eng schließend umeinander angebracht werden, wobei eines der besagten Rohre (2, 3) aus thermoplastischem Material gefertigt und extrudiert wird, dadurch gekennzeichnet, daß das andere Rohr durch Pultrusion oder Pull-Winding aus thermoplastischem oder vorzugsweise thermoaushärtendem Material hergestellt wird.

2. Verfahren gemäß Anspruch 1, dadurch gekennzeichnet, daß das durch Pultrusion oder Pull-Winding hergestellte Rohr (3) um das andere Rohr (2) herum angebracht wird.

3. Verfahren gemäß Anspruch 1, dadurch gekennzeichnet, daß das durch Pultrusion oder Pull-Winding hergestellte Rohr (3) in dem anderen Rohr (2) angebracht ist.

4. Verfahren gemäß einem der vorgenannten Ansprüche, dadurch gekennzeichnet, daß die Oberfläche des äußeren Rohrs (2) aufgerauht wird, bevor das äußere Rohr (3) mit der aufgerauhten Oberfläche verbunden wird.

5. Verfahren gemäß Anspruch 4, dadurch gekennzeichnet, daß das innere Rohr (2) an seiner Oberfläche mit herausragenden Rippen (4), die sich in dessen Längsrichtung erstrecken, versehen wird, bevor das äußere Rohr (3) mit der gerippten Oberfläche ineinandergreifend verbunden wird.

6. Verfahren gemäß Anspruch 4, dadurch gekennzeichnet, daß das innere Rohr (2) mit Kerben versehen wird, bevor das äußere Rohr (3) mittels dieser Kerben ineinandergreifend verbunden wird.

7. Verfahren gemäß einem der vorgenannten Ansprüche, dadurch gekennzeichnet, daß das durch Pultrusion oder Pull-Winding hergestellte Rohr (3) aus thermoaushärtendem Material gefertigt ist.

8. Verfahren gemäß Anspruch 7, dadurch gekennzeichnet, daß das durch Pultrusion oder Pull-Winding hergestellte Rohr (3) aus zumindest einem thermoaushärtenden Material aus der aus Polyester, Epoxy und Vinylester bestehenden Gruppe besteht.

9. Verfahren gemäß einem der vorgenannten Ansprüche, dadurch gekennzeichnet, daß das extrudierte Rohr (2) aus zumindest einem thermoplastischen Material aus der aus Polypropylen, Polyvinylchlorid, hochdichtem Polyethylen, Polyamid, LLD und PE bestehenden Gruppe besteht.

## Revendications

1. Procédé pour la fabrication d'un tuyau composite en plastique, conformément auquel on monte au moins deux tuyaux (2, 3) en matière synthétique en ajustage serré l'un autour de l'autre, un desdits tuyaux (2, 3) étant réalisé en une matière thermoplastique et extrudé, caractérisé en ce que l'autre tuyau est extrudé par étirage ou enroulé par traction dans une matière thermoplastique ou de préférence thermodurcissable.

2. Procédé selon la revendication 1, caractérisé en ce que le tuyau (3) extrudé par étirage ou enroulé par traction est monté autour de l'autre tuyau (2).

3. Procédé selon la revendication 1, caractérisé en ce que le tuyau (3) extrudé par étirage ou enroulé par traction est monté à l'intérieur de l'autre tuyau (2).

4. Procédé selon l'une quelconque des revendications précédentes, caractérisé en ce que la surface du tuyau interne (2) est rendue rugueuse avant de mettre en contact mutuel le tuyau externe (3) et la surface rendue rugueuse.

5. Procédé selon la revendication 4, caractérisé en ce que le tuyau interne (2) est muni sur sa surface de cannelures saillantes (4) s'étendant dans sa direction longitudinale avant de mettre en contact mutuel le tuyau externe (3) et la surface cannelée.

6. Procédé selon la revendication 4, caractérisé en ce que le tuyau interne (2) est muni d'encoches avant de mettre en contact mutuel le tuyau externe (3) et ces encoches.

7. Procédé selon l'une quelconque des revendications précédentes, caractérisé en ce que le tuyau (3) extrudé par étirage ou enroulé par traction est réalisé en une matière thermodurcissable.

8. Procédé selon la revendication 7, caractérisé en ce que le tuyau (3) extrudé par étirage ou enroulé par traction est réalisé en au moins une matière thermodurcissable du groupe constitué par : le polyester, l'époxy et l'ester vinylique.

9. Procédé selon l'une quelconque des revendications précédentes, caractérisé en ce que le tuyau extrudé (2) est réalisé en au moins une matière thermoplastique du groupe constitué par : le polypropylène, le chlorure de polyvinyle, le polyéthylène haute densité, le polyamide, le LLD et le PE.
